Europäisches Patentamt

European Patent Office

Office européen des brevets

(19)

(11) Veröffentlichungsnummer : **0 148 502**
**B1**

(12) # EUROPÄISCHE PATENTSCHRIFT

(45) Veröffentlichungstag der Patentschrift :
26.04.89

(21) Anmeldenummer : 84116341.3

(22) Anmeldetag : 27.12.84

(51) Int. Cl.⁴ : **B 60 V   3/02**, B 65 G   7/06

(54) Druckluftsteuerungsvorrichtung für eine Luftkissen-trägerpalette.

(30) Priorität : 03.01.84 DE 3400101

(43) Veröffentlichungstag der Anmeldung :
17.07.85 Patentblatt 85/29

(45) Bekanntmachung des Hinweises auf die Patenterteilung : 26.04.89 Patentblatt 89/17

(84) Benannte Vertragsstaaten :
AT BE CH DE FR GB IT LI NL SE

(56) Entgegenhaltungen :
FR–A– 1 548 782
US–A– 3 251 432
US–A– 3 648 799
US–A– 3 994 540

(73) Patentinhaber : DELU-Luftkissen-Transportgerätetechnik GmbH
Treitschkestrasse 13
D-8500 Nürnberg 20 (DE)

(72) Erfinder : Michels, Hartwig, Dr.-Ing.
Steinplattenweg 10
D-8500 Nürnberg (DE)
Erfinder : Klingler, Knud, Dr.
Treitschkestrasse 13
D-8500 Nürnberg (DE)

(74) Vertreter : Patentanwälte Zellentin & Partner
Zweibrückenstrasse 15
D-8000 München 2 (DE)

EP 0 148 502 B1

## Beschreibung

Die Erfindung betrifft eine Druckluftsteuerungsvorrichtung für eine, mehrere an eine Druckluftquelle anschließbare Luftkissen aufweisende Luftkissenträgerpalette, nach dem Oberbegriff des Patentanspruchs 1.

Eine derartige Druckluftsteuerungsvorrichtung ist aus der DE-A-20 01 831 bekannt. Diese bekannte Druckluftsteuerungsvorrichtung weist eine Fühleinrichtung auf, die bei Druckschwankungen, die zu einem Flattern des Kissens führen, automatisch eine Ventilsteuervorrichtung steuert, die die Druckmittelzufuhr in das Tragkissen reduziert, bis wieder ein stabiler Zustand erreicht ist.

Aus der DE-A-26 53 243 ist ein Druckausgleichsträger mit Höhensteuerungsaußenventil bekannt, das in Abhängigkeit von der Bodenstruktur die Druckmittelzufuhr steuert.

Der Erfindung liegt die Aufgabe zugrunde, eine Druckluftsteuerungsvorrichtung der eingangs genannten Art so zu verbessern, daß sie einen flatterfreien Betrieb der Luftkissen und eine vorgegebene Hubhöhe unabhängig von der jeweiligen Last und deren Verteilung auf der Palette sowie bei unterschiedlichen Bodenrauhigkeiten und -unebenheiten aufrechtzuerhalten ermöglicht.

Diese Aufgabe wird durch eine Druckluftsteuerungsvorrichtung mit den Merkmalen des kennzeichnenden Teils des Patentanspruchs 1 gelöst.

Vorteilhafte weitere Ausgestaltungen der Erfindung sind in den Unteransprüchen gekennzeichnet.

Nachstehend wird die Erfindung an einem Ausführungsbeispiel für eine Luftkissenträgerpalette unter Bezug auf die Zeichnungen näher erläutert. Es zeigt:

Fig. 1 eine Luftkissenträgerpalette von unten in schematischer Darstellung,

Fig. 2 einen Schnitt entlang der Linie II-II in Fig. 1,

Fig. 3 ein Schaltschema einer automatischen Druckluftsteuerungsvorrichtung.

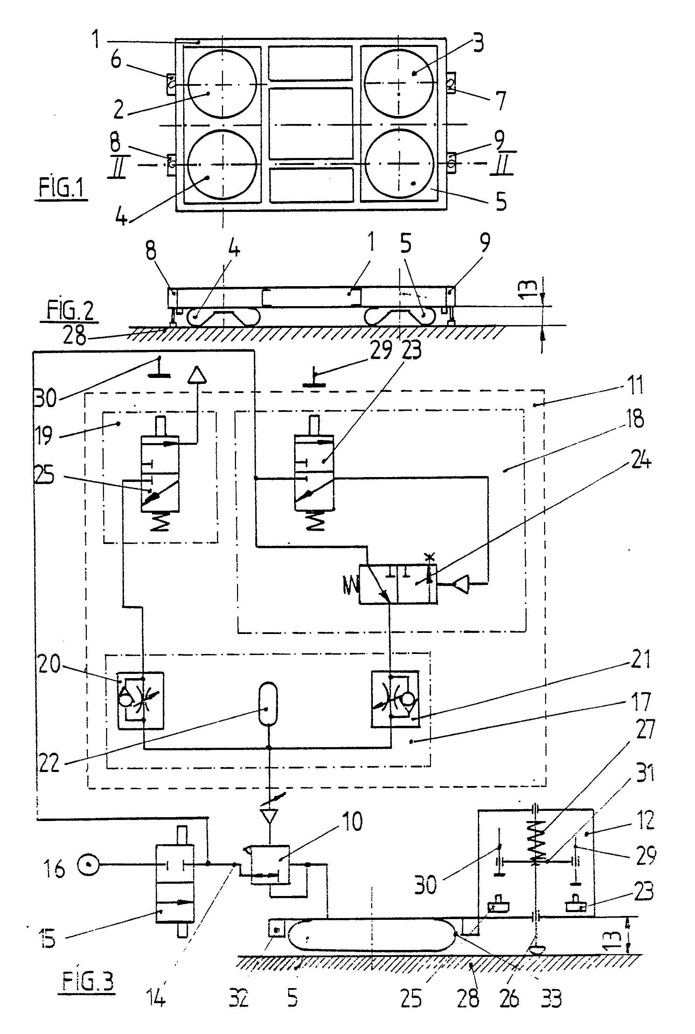

Die in Fig. 1 und 2 dargestellte Luftkissenträgerpalette weist einen Träger 1 mit vier an der Unterseite angeordneten aufblähbaren Luftkissen 2, 3, 4, 5 bekannter Bauart auf. Im dargestellten Beispiel ist jedem Luftkissen 2, 3, 4, 5 eine automatische Druckluftsteuerungsvorrichtung 6, 7, 8, 9 zugeordnet. Es ist jedoch auch möglich, mit einer Druckluftsteuerungsvorrichtung jeweils zwei oder mehr Luftkissen zu steuern.

Jede der automatischen Druckluftsteuerungsvorrichtungen 6, 7, 8, 9 weist ein Druckregelventil 10 (s.Fig. 3) auf, das durch eine Steuerung 11 in Abhängigkeit von einem Geber 12 der Hubhöhe 13 steuerbar ist.

Das Druckregelventil 10 ist eingangsseitig über eine Leitung 14 und ein Absperrventil 15 mit einer Druckluftquelle 16 und ausgangsseitig mit dem Innenraum des (oder der) zugeordneten einzelnen Luftkissen(s) 2, 3, 4, 5 verbunden.

Die pneumatisch ausgebildete Steuerung 11 des Druckregelventils 10 enthält ein Verzögerungs- und Ausgleichsglied 17, das über eine Absperrvorrichtung 18 an die Druckluftquelle 16 angeschlossen und mit einer Entlüftungsvorrichtung 19 verbunden ist.

Das Verzögerungs- und Ausgleichsglied 17 weist zwei einstellbare Drosselrückschlagventile 20, 21 und einen Speicher 22 für die Steuerdruckluft auf.

Die Absperrvorrichtung 18 besteht aus einem mechanisch schaltbaren 3/2-Wegeventil 23 und einem pneumatisch schaltbaren 3/2-Wegeventil 24 und die Entlüftungsvorrichtung aus einem mechanisch schaltbaren 3/2-Wegeventil 25.

Der Geber 12 der Hubhöhe 13 ist im Ausführungsbeispiel mechanisch ausgeführt und enthält einen beweglich angeordneten Stößel 26, der durch eine Feder 27 im Kontakt mit der Bodengleitfläche 28 gehalten wird. Mit dem Stößel 26 sind zwei längenverstellbare Schaltstangen 29, 30 unterschiedlicher Wirklänge mittels eines Mitnehmers 31 fest verbunden. Die Schaltstange 29 ist derart angeordnet, daß sie bei zunehmender Hubhöhe 13 als erste bei einem durch die eingestellte Wirklänge der Schaltstange 29 vorgegebenen Hubweg 13, der der optimal aufgeblähten Arbeitsstellung des Luftkissens 5 entspricht, das 3/2-Wegeventil 23 der Absperrvorrichtung 18 betätigt. Dadurch wird das pneumatisch schaltbare 3/2-Wegeventil 24 auf Sperrstellung geschaltet.

Steigt die Hubhöhe jedoch weiter bis zu einem durch die eingestellte Wirklänge der Schaltstange 29 vorbestimmten maximalen Grenzwert an, so wird durch die Schaltstange 30 das 3/2-Wegeventil 25 der Entlüftungsvorrichtung 19 betätigt.

Die Druckluftsteuerungsvorrichtung 9 für das Luftkissen 5 arbeitet wie folgt: Im Ruhezustand sind sowohl der Steuerdruck als auch der Speisedruck im Druckregelventil 10 Null, und der Träger 1 mit seinen leeren Luftkissen 5, 6, 7, 8 liegt auf seinen Stützen 32 auf der Bodengleitfläche 28 auf. Durch öffnen des Absperrventils 15 gelangt von der Druckluftquelle 16 Druckluft durch die Leitung 14 zum Eingang des Druckregelventils 10. Gleichzeitig wird der Steuerdruck im Druckregelventil 10 aufgebaut. Die zugeführte Druckluft gelangt durch das in der Ausgangsstellung offene 3/2-Wegeventil 24 durch das Drosselrückschlagventil 21 sowohl in den Speicher 22 als auch in die Steuerkammer des Druckregelventils 10. Die Druckluft kann zwar noch das Drosselrückschlagventil 20 der Entlüftungsleitung passieren, jedoch ist der weitere Weg durch das in der Ausgangsstellung geschlossene 3/2-Wegeventil 25 geschlossen. Je höher nun der Steuerdruck ansteigt, umso mehr Druckluft gelangt durch das Druckregelventil 10 in das Luftkissen 5, das sich aufbläht. Wenn die vorgegebene Arbeitshubhöhe erreicht ist, wird das 3/2-Wegeventil 23 betätigt — für den Durchfluß von Druckluft geöffnet — und damit das 3/2-Wegeventil 24 geschlossen. (Zur Schaltung wird auf die detaillierte Darstellung der Absperrvorrichtung 18 in Fig. 3 hingewiesen). Durch die Schließung des 3/2-Wegeventils 24 wird die Zufuhr von Steuerluft zum Druckregelventil 10 unterbrochen, so daß kein weiterer Aufbau des Steuerdrucks erfolgen kann.

Damit wird der Steuerdruck des Druckregelventils 10 auf einen Wert in Abhängigkeit von der Hubhöhe und damit auch von der Last begrenzt, wodurch auch eine Regelung des Arbeitsdruckluftstromes in Abhängigkeit von der Last gewährleistet ist. ·

Bei den handelsüblichen einfachen Druckregelventilen 10 ist in der Steuerkammer eine Öffnung vorgesehen, mittels der die Steuerkammer mit der Atmosphäre kommuniziert. Durch die Öffnung erfolgt ein langsamer Abbau des Steuerdrucks. Durch das Vorhandensein des Druckspeicherbehälters 22 wird dieser Abbau verzögert.

Es kann aber auch ein Druckregelventil 10 mit einer luftdichten Steuerkammer vorgesehen werden, dann bleibt beim Absperren der Druckluftzufuhr durch das 3/2-Wegeventil 24 der Steuerdruck praktisch konstant und damit auch die Stärke der Druckluftzufuhr in das Luftkissen.

Fährt man mit dem Luftkissen 5 über eine rauhere Bodengleitfläche 28 bzw. über kleinere Risse oder Unebenheiten, erfolgt ein stärkeres Abströmen von Druckluft aus dem Luftkissen 5, was ein Absacken des Luftkissens 5 und damit auch eine Verringerung der Hubhöhe 13 bewirkt. Dadurch gibt die Schaltstange 29 das 3/2-Wegeventil 23 frei, das in seine geschlossene Ausgangsstellung gelangt. In der Folge öffnet das 3/2-Wegeventil ·24, so daß sich der Steuerdruck entsprechend aufbauen kann, bis die Druckluftstromstärke so ansteigt, daß der Abfluß infolge des rauhen Bodens bzw. der Risse kompensiert und die vorgegebene Hubhöhe wieder erreicht wird, wonach die Steuerdruckluftzufuhr wie oben beschrieben, unterbrochen wird.

Hat man den rauhen Boden bzw. die Risse und Unebenheiten passiert und es strömt dadurch weniger Luft ab als zuvor, vergrößert sich bei der eingeregelten gleichbleibenden Druckluftzufuhrstärke die Hubhöhe 13 über den vorgegebenen Wert hinaus. Dies bewirkt, daß die Schaltstange 30 das 3/2-Wegeventil 25 betätigt und es öffnet. Hierdurch kann Steuerdruckluft durch das Drosselrückschlagventil 21 und das geöffnete 3/2-Wegeventil 25 entweichen, bis die vorgegebene Hubhöhe 13 erreicht wird, bei der die Schaltstange 30 nicht mehr im Eingriff mit dem 3/2-Wegeventil 25 steht, das in seine geschlossene Ausgangslage zurückkehrt.

Die Drosselrückschlagventile 20, 21, aber auch der Speicher 22 dienen dazu, daß der Aufbau und auch der Abbau der Steuerdruckluft verlangsamt, kontinuierlich und stoßfrei erfolgt, so daß dadurch keine Schwingungen auf die Palette übertragen werden können. Durch Einstellung der Drosseln kann der Auf- und Abbau der Steuerdruckluftstärke verlangsamt oder beschleunigt werden.

Bei einer Transportpalette mit mehreren ungleichmäßig belasteten Luftkissen 2, 3, 4, 5 mit automatischen Druckluftsteuerungsvorrichtungen 6, 7, 8, 9 wird das am wenigsten belastete Luftkissen als erstes die vorgeschriebene Hubhöhe 13 erreichen und das am meisten belastete Luftkissen als letztes. Im Endzustand hat die Transportpalette auf jeden Fall auf allen Seiten die gleiche Transporthöhe.

Die Druckluftsteuerungsvorrichtungen können an beliebiger Stelle angeordnet werden. Es empfiehlt sich jedoch, sie symmetrisch anzuordnen, daß sie einander gewichtsmäßig ausgleichen. Die Geber 12 sind vorzugsweise am Außenrand dort anzuordnen, wo Schwankungen in der Hubhöhe oder Aufblähung am stärksten wirksam werden.

Die Steuerung der Absperrvorrichtung 18 und der Entlüftungsvorrichtung 19 kann auch auf beliebige andere Weise, z. B. elektrisch, elektromagnetisch, hydraulisch erfolgen und die Geber 12 können ebenso beliebige elektrische, optische, hydraulische oder pneumatische Steuerungsimpulse aufnehmen und weitergeben. Die Geber 12 können statt der Hubhöhe 13, die den Abstand des Trägers 1a von der Bodengleitfläche 28 wiedergibt, auch den wandernden Berührungspunkt von einem Trägerpunkt zu einem beliebigen Punkt der oberen Außenwand (33) des aufblähbaren Ringkörpers des Luftkissens abtasten. Der Geber 12 kann auch ein Teil der Wandung 33 sein.

## Patentansprüche

1. Druckluftsteuerungsvorrichtung für eine, mehrere an eine Druckluftquelle (16) anschließbare Luftkissen (2, 3, 4, 5) aufweisende Luftkissenträgerpalette, wobei der jeweilige Arbeitsdruck in den Luftkissen (2, 3, 4, 5) proportional zur Last geregelt wird, und die ein Ventil aufweist, das in Abhängigkeit von einem Geber (12) gesteuert wird, dadurch gekenneichnet, daß das Ventil ein Druckregelventil (10) ist, das pneumatisch und automatisch durch eine Steuerung (11) ferngesteuert ist und dessen Steuerdruck in Abhängigkeit der vorgegebenen durch den Geber (12) gemessenen Hubhöhe der Palette über der Bodengleitfläche (28) oder des vorgegebenen durch den Geber (12) gemessenen Blähgrades eines oder mehrerer Luftkissen(s) (2, 3, 4, 5) kontinuierlich und/oder verlangsamt auf- bzw. abgebaut wird.

2. Druckluftsteuerungsvorrichtung nach Anspruch 1, dadurch gekennzeichnet, daß der Steuerdruck und damit der Betriebsdruck in den Luftkissen (2, 3, 4, 5) auch in Funktion der Bodenbeschaffenheit geregelt wird.

3. Druckluftsteuerungsvorrichtung nach Anspruch 1 oder 2, dadurch gekennzeichnet, daß der Steuerdruck kontinuierlich und/oder verlangsamt auf- bzw. abgebaut wird.

4. Druckluftsteuerungsvorrichtung nach Anspruch 2, dadurch gekennzeichnet, daß die vom Steuerdruck beaufschlagte Kammer des Druckregelventils (10) luftdicht ist.

5. Druckluftsteuerungsvorrichtung nach Anspruch 2 oder 3, dadurch gekennzeichnet, daß der Geber (12) und die Steuerung (11) derart zusammenwirken, daß bei Erreichen der vorgegebenen Hubhöhe (13) bzw. des vorgegebenen Blähgrades die Zufuhr von Steuerluft zum Druckregelventil (10) geschlossen wird und bei Überschreiten der vorgegebenen Hubhöhe (13) bzw. des Blähgrades ein Entlüften von Steuerluft erfolgt.

6. Druckluftsteuerungsvorrichtung nach Anspruch 4, dadurch gekennzeichnet, daß die Steuerung (11) eine Absperrvorrichtung (18) für die Zufuhr von Steuerluft und eine Entlüftungsvorrichtung (19) enthält.

7. Druckluftsteuerungsvorrichtung nach einem der Ansprüche 2 bis 5, dadurch gekennzeichnet, daß in die Zufuhrleitung für Steuerluft, in das Druckregelventil (10) und in die Entlüftungsleitung jeweils ein Drosselventil oder ein Drosselrückschlagventil (20, 21) eingebaut ist.

8. Druckluftsteuerungsvorrichtung nach einem der Ansprüche 2 bis 6, dadurch gekennzeichnet, daß das Druckregelventil (10) mit einem Speicher (22) für die Steuerdruckluft verbunden ist.

9. Druckluftsteuerungsvorrichtung nach einem der Ansprüche 1 bis 7, dadurch gekennzeichnet, daß der Geber (12) ein Teil der Wandung (33) des Luftkissens (2, 3, 4, 5) ist.

## Claims

1. A compressed air control device for a hover-type carrier pallet comprising one or a plurality of air cushions (2, 3, 4, 5) adapted to be connected to a compressed air source (16), the relevant working pressure in the air cushions (2, 3, 4, 5) being regulated in proportion to the load, and comprising a valve which is controlled as a function of a transmitter (12), characterised in that the valve is a pressure regulating valve (10) which is remotely controlled pneumatically and automatically by a control means (11) and of which the control pressure is built up and dissipated continuously and/or with a time lag, as a function of the height to which the pallet is to be lifted above the floor surface (28) as measured by the transmitter (12), or the degree of inflation of one or a plurality of air cushions (2, 3, 4, 5) predetermined and measured by the transmitter (12).

2. A compressed air control device according to Claim 1, characterised in that the control pressure and thus the working pressure in the air cushions (2, 3, 4, 5) is regulated also as a function of the floor consistency.

3. A compressed air control device according to Claim 1 or 2, characterised in that the control pressure is built up or dissipated continuously and/or with a time lag.

4. A compressed air control device according to Claim 2, characterised in that the chamber of the pressure regulating valve (10) to which the control pressure is applied is air tight.

5. A compressed air control device according to Claim 2 or 3, characterised in that the transmitter (12) and the control means (11) interact in such a way that upon attainment of the preset height of lift (13) or the preset degree of inflation, the supply of control air to the pressure regulating valve (10) is shut off and if the given height of lift (13) or degree of inflation is exceeded, control air is vented.

6. A compressed air control device according to Claim 4, characterised in that the control means (11) contains a shut-off device (18) to stop the supply of control air and also a venting device (19).

7. A compressed air control device according to one of Claims 2 to 5, characterised in that a throttle valve or a non-return throttle valve (20, 21) is built into the control air feed line, into the pressure regulating valve (10) and into the venting line.

8. A compressed air control device according to one of Claims 2 to 6, characterised in that the pressure regulating valve (10) is connected to means (22) of storing the control compressed air.

9. A compressed air control device according to one of Claims 1 to 7, characterised in that the transmitter (12) is a part of the wall (33) of the air cushion (2, 3, 4, 5).

## Revendications

1. Dispositif de commande à air comprimé pour une palette porteuse à coussins d'air qui présente plusieurs coussins d'air (2, 3, 4, 5), que l'on peut relier à une source (16) d'air comprimé, la pression de travail respective dans les coussins d'air (2, 3, 4, 5) étant régulée de façon proportionnelle à la charge, et qui présente une soupape, qui est commandée en fonction d'un capteur (12), caractérisé en ce que la soupape est une soupape (10) de régulation de pression, qui est télécommandée pneumatiquement et automatiquement par une commande (11), et dont la pression de commande augmente ou diminue de façon continue ou retardée en fonction de la hauteur de levée prédéfinie, mesurée par le capteur (12), de la palette au-dessus de la surface (28) de glissement du sol ou du degré prédéfini de gonflement, mesuré par le capteur (12), d'un ou de plusieurs coussin(s) d'air (2, 3, 4, 5).

2. Dispositif de commande à air comprimé selon la revendication 1, caractérisé en ce que la pression de commande et de cette façon la pression de fonctionnement dans les coussins d'air (2, 3, 4, 5), sont aussi régulées en fonction de la nature du sol.

3. Dispositif de commande à air comprimé selon la revendication 1 ou 2, caractérisé en ce que la pression de commande augmente ou diminue de façon continue ou retardée.

4. Dispositif de commande à air comprimé selon la revendication 2, caractérisé en ce que la chambre d'admission de pression de commande de la soupape (10) de régulation de pression est étanche.

5. Dispositif de commande à air comprimé selon la revendication 2 ou 3, caractérisé en ce que le capteur (12) et la commande (11) coopèrent de manière telle que, lorsque l'on atteint la hauteur prédéfinie (13) de levée ou un degré prédéfini de gonflement, l'amenée d'air de commande à la soupape (10) de régulation de pression est fermée et en ce que, lorsque l'on dépasse la hauteur (13) prédéfinie de levée ou le degré prédéfini de gonflement, il se produit une purge de l'air de commande.

6. Dispositif de commande à air comprimé selon la revendication 4, caractérisé en ce que la commande (11) comporte un dispositif (18) de verrouillage pour l'amenée d'air de commande et un dispositif (19) de purge d'air.

7. Dispositif de commande à air comprimé selon l'une des revendications 2 à 5, caractérisé en ce que la conduite d'amenée d'air de commande, la soupape (10) de régulation de pression et la conduite de purge comportent respectivement une valve d'étranglement ou un clapet anti-retour d'étranglement (20, 21)

8. Dispositif de commande à air comprimé selon l'une des revendications 2 à 6, caractérisé en ce que la soupape (10) de régulation de pression est reliée à un accumulateur (22) d'air comprimé de commande.

9. Dispositif de commande à air comprimé selon l'une des revendications 1 à 7, caractérisé en ce que le capteur (12) est une partie de la paroi (33) du coussin d'air (2, 3, 4, 5).

FIG.1

FIG.2

FIG.3